# EUROPÄISCHE PATENTSCHRIFT

(11) **EP 1 440 937 B1**
(45) Veröffentlichungstag und Bekanntmachung des Hinweises auf die Patenterteilung: **30.11.2005**
(21) Anmeldenummer: 04000229.7
(22) Anmeldetag: 08.01.2004
(51) Int. Cl.: C01F 7/44, C01F 7/42, C01F 7/02, C04B 22/06, C04B 18/14, C04B 38/02, C03C 13/06, C04B 35/10

(54) **Hochtonerdehaltiger Rohstoff, Verfahren zu seiner Herstellung und Verwendung des Rohstoffs**
High-alumina raw material, process for its preparation and the use thereof
Materieau primaire, procede pour sa preparation et son utilisation

(30) Priorität: 08.01.2003 DE 10300170
(43) Veröffentlichungstag der Anmeldung: 28.07.2004
(73) Patentinhaber: Aluminium-Salzschlacke Aufbereitungs GmbH, 30179 Hannover (DE)
(72) Erfinder: Feige, Reinhard, Dipl.-Ing., 58332 Schwelm (DE); Merker, Gerhard, Dipl.-Ing., 58239 Schwertw (DE); Steyer, Jürgen, Dipl.-Ing., 44803 Bochum (DE)
(74) Vertreter: Müller-Wolff, Thomas

(56) Entgegenhaltungen:
- EP-A- 1 180 504
- US-B1- 6 238 633

## Beschreibung

Die Erfindung betrifft einen hochtonerdehaltigen Rohstoff mit 50-80 % Al2O3, bei dem Al2O3 mineralogisch in Form von Korund α-Al2O3, Spinell MgAl2O4, Aluminiummonohydroxid Al2O3.H2O und Aluminiumtrihydroxid Al2O3.3H2O vorliegt, und das Gewichtsverhältnis von Al-Monohydroxid zu Al-Trihydroxid größer als 0,25 beträgt. Weiterhin betrifft die Erfindung ein Verfahren zur Herstellung des hochtonerdehaltigen Rohstoffs aus einem Tonerdeprodukt der Aufarbeitung von Aluminium-Salzschlacke, sowie die Verwendung als sinteraktiver Tonerdeträger für die Herstellung von keramischen und feuerfesten Produkten, Zement, porosierten Bindemittelbaustoffen, Schlackenbildnern für die Eisen- und Stahlerzeugung, Mineralwolle und keramischen Fasern.

Hochtonerdehaltige Rohstoffe mit einem Al2O3-Gehalt von 50-80 % stehen entweder als natürliche Rohstoffe zur Verfügung (wie Bauxit, Sillimanit, Kyanit und Andalusit) oder werden nach chemischer Aufbereitung von Bauxit zu reinem Aluminiumoxid und anschließendem Sintern oder Schmelzen synthetisch erzeugt (wie Mullit und Spinell). Zur Schonung der natürlichen Ressourcen wird immer mehr angestrebt, sekundäre Rohstoffe einzusetzen, die durch Aufbereitung von Reststoffen aus Recyclingverfahren gewonnen werden.

Aluminium-Salzschlacke entsteht als Reststoff beim Recycling von Aluminium-Metall. Dabei wird auf die Metallschmelze eine Abdeckung aus Salz (z.B. eine Mischung aus 70 % NaCl, 28 % KCI und 2 % CaF2) aufgebracht, um die Oxidation des Metalls möglichst gering zu halten und oxidische Verunreinigungen in Form einer Salzschlacke aufzunehmen. Die Salzschlacke enthält etwa 40-50 % Salz, 40-50 % Oxide und etwa 10 % metallisches Aluminium. Da Aluminium beim Schmelzen an Luft nicht nur mit Sauerstoff sondern auch mit Stickstoff reagiert, enthält eine Salzschlacke neben Aluminiumoxid auch Aluminiumnitrid.

Zur möglichst vollständigen Rückgewinnung der Bestandteile wird die Salzschlacke einem Aufbereitungsprozess unterworfen, bei dem das Metall nach Zerkleinern der Salzschlacke zum größten Teil mechanisch zurückgewonnen werden kann. Anschließend wird die Salzschlacke mit Wasser behandelt. Dabei geht das Salz in Lösung. Nach Abtrennen der unlöslichen Bestandteile, hier "Tonerdeprodukt" genannt, wird durch Eindampfen der Lösung das Salz kristallisiert und ist damit erneut als Schmelzsalz verwendbar.

Das Tonerdeprodukt enthält etwa 50-80 % Al2O3. Nach M. Beckmann (Aluminium 67 [1991] 586-593) liegt das Al2O3 mineralogisch in Form von Korund α-Al2O3, Spinell MgAl2O4 und Al-Trihydroxid β-Al2O3.3H2O (Bayerit) vor. Al-Trihydroxid bildet sich in der Naßaufbereitung von Salzschlacke aus der Reaktion von Wasser mit Aluminium bzw. Aluminiumnitrid gemäß den folgenden Gleichungen:

2Al + 6H2O = Al2O3.3H2O + 3H2

2AlN + 6H2O = Al2O3.3H2O + 2NH3

Da der Zerkleinerungsgrad der Salzschlacke und die Reaktionszeit in der Praxis der Naßaufbereitung nach wirtschaftlich optimalen Gesichtspunkten eingestellt werden, verbleiben im Tonerdeprodukt noch Restgehalte an Al-Metall und Al-Nitrid, die bis zu 5 % betragen können.

Das Tonerdeprodukt wird als schlammiger Filterkuchen (meist mit einer Feuchte von etwa 30-45 % Wasser, mit schlechter Förder- und Dosierbarkeit und stark nach Ammoniak riechend) aus dem Nassaufbereitungsprozess ausgeschleust. Die ungünstige Konsistenz und die Restgehalte an Aluminium-Metall und Aluminium-Nitrid sind für die Verwendbarkeit des Tonerdeprodukts, insbesondere bei der Herstellung von gesinterten oder geschmolzenen Roh- und Werkstoffen, von erheblichem Nachteil. Bei der Weiterverarbeitung des Tonerdeprodukts (Mischen mit anderen mineralischen Stoffen, Trocknen, Kalzinieren, Sintern und Schmelzen) ergeben sich dadurch folgende, teils schwerwiegende Probleme:
- Geruchsbelästigung durch Ammoniak bei der Handhabung
- Heftige thermische Reaktion unter Gasentwicklung (Wasserdampf, H2, NH3) beim Mischen mit gebranntem Kalk und Zement, dadurch mangelnde mechanische Festigkeit von Formkörpern (z.B. Pellets und Briketts)
- Korrosion der Ausrüstungen in Folge der Gasentwicklung
- Explosionsgefahr in Folge der Gasentwicklung
- Bildung von mechanischen Anbackungen und Verstopfungen in den maschinellen Anlagen und auf den Förderwegen
- Schwer steuerbare örtliche Temperaturschwankungen bzw. Überhitzungen in Drehrohrofen-Sinterprozessen in Folge unkontrollierter thermischer Reaktionen des Al-Metalls und des Al-Nitrids, dadurch unerwünschte Bildung von Schmelze, Anbackungen und Verklumpungen.

Aus DE-4319163 ist ein feinkörniger Füllstoff für zementgebundene Feststoffe bekannt, der ein hochtonerdehaltiger Reststoff (Tonerdeprodukt) aus der Aufarbeitung von Salzschlacken der Aluminiumindustrie ist, und der bezogen auf getrocknete Substanz bei einem Al2O3-Gehalt von 55-70 %, einem MgO-Gehalt von 7-10 % und einem Si02-Gehalt von 6-9% einen Glühverlust von 7-11 % aufweist. Über Gehalte an Aluminiumhydroxid wird keine Angabe gemacht.

DE-4345368 beschreibt ein Verfahren zur Herstellung von gesintertem spinellhaltigem Aluminatzementklinker auf Basis des gleichen Reststoffs wie in DE-4319163, bei Sintertemperaturen oberhalb 1100°C.

EP-0838443 beinhaltet ein Verfahren zur Verwertung von Al-haltigen Reststoffen durch Herstellung von gesintertem Sulfoaluminatzement, ausgehend beispielsweise von einem Rückstand aus der Aufarbeitung von Aluminium-Salzschlacken, der 65,7 % Al2O3, 10,1 % MgO, 7,9 % Si02 und 7,3 % H2O enthält, und bei dem Al2O3 in den kristallinen Phasen Korund α-Al2O3, Bayerit Al(OH)3 und Spinell MgAl2O4 vorliegt. Die Sintertemperaturen liegen bei 1150-1300°C (Beispiele 1 und 2).

EP-0881200 beschreibt eine feuerfeste Bodenauskleidung für Aluminium-Elektrolysezellen in Form einer monolithischen Stampfung aus getrockneten und kalzinierten Formkörpern (Pellets, Briketts, Steine) auf Basis eines hochtonerdehaltigen Pulvers aus der Aufarbeitung von Krätzen und Salzschlacken der Aluminiumindustrie, enthaltend 40-90 % Al203, 4-20 % MgO, 0,5-15 % SiO2, 0,1-25% AIN, 0,1-10% Al (metallisch) und max. 10 % Glühverlust. Das Pulver enthält als kristalline Phasen Korund α-Al2O3, Spinell MgOxAl2O3 und Flußspat CaF2. Aluminiumhydroxid wird nicht genannt.

EP-1036044 schützt ein Verfahren zur Herstellung von synthetischen Glasfasern (Gesteinsfasern, Mineralwolle), bei dem 2-20 Gew.-% der mineralischen Feststoffe mineralischer Abfall mit einem Halogengehalt von mindestens 1 Gew.-% sind, wie Tonerderückstande aus der Aufarbeitung von Aluminiumkrätze und Aluminium-Salzschlacke, mit Gehalten von 0,5-10 Gew.-% Al-Metall, 50-90 Gew.-% Al2O3 und bis zu 5 Gew.-% Fluor oder anderen Halogenen. Die Schrift enthält keine Angaben zu Gehalten an Aluminiumhydroxid.

EP-1180504 betrifft einen porosierenden, erstarrungsbeschleunigenden Bindemittelbaustoff-Zusatz in Form eines hochtonerdehaltiges Pulvers, enthaltend 50-90 % Al2O3, bis zu 10 % Al (metallisch) und mineralische Hauptbestandteile in Form von Korund (α-Al2O3) und Spinell (MgOxAl203), wobei die metallischen Al-Teilchen von mineralischen Übergangsmodifikationen von Aluminiumtrihydroxid (Al2O3x3H2O) zu α-Aluminiumoxid umhüllt sind. Wie aus dem Verfahren zur Herstellung des Pulvers hervorgeht, wird ein hochtonerdehaltiger Reststoff aus der Aufarbeitung von Aluminium-Salzschlacke bei Rauchgastemperaturen von 400 bis 500°C schockartig getrocknet und anschließend bei Temperaturen bis 1000°C teilkalziniert. Nach C. Misra (Industrial Alumina Chemicals, American Chemical Society 1986, Seite 76) erfolgt bei einer schnellen thermischen Dehydratation von Aluminiumtrihydroxiden keine Umwandlung in Aluminiummonohydroxid, sondern eine direkte Umwandlung in die Übergangsmodifikationen ρ-Al2O3, η-Al2O3 (ab 400°C) und θ-Al2O3 (ab 750°C). Korund α-Al2O3 bildet sich ab 1200°C.

US-5045506 beinhaltet die Verwendung von Tonerdeprodukten aus der Aufarbeitung von Aluminium-Krätze und -Salzschlacke zur Herstellung von Mineralwolle, wobei (Anspruch 6) das Tonerdeprodukt aus der Aufarbeitung von Salzschlacke so weit erhitzt (kalziniert) werden soll, dass vorhandenes Aluminiumhydroxid in Aluminiumoxid umgewandelt wird.

In US-5424260 ist ein Tonerdeprodukt NMP aus der Aufarbeitung von Aluminium-Salzschlacke beschrieben und dessen Verwendung zur Herstellung von keramischen Fasern. Das Tonerdeprodukt NMP enthält 40-75 Gew.-% Al2O3, 5-20 Gew.-% MgO, 2-15 Gew.-% SiO2 bei einem Glühverlust von etwa 20 Gew.-% (Spalte 5, Zeilen 57-68). Zu Gehalten an Aluminiumhydroxid gibt es keine Angaben.

US-6238633 beansprucht ein Verfahren zur Herstellung eines gesinterten Calciumaluminat-Schlackenbildners für die Stahlherstellung, basierend auf einem nicht-metallischem Produkt NMP (Spalte 5, Zeile 44 ff), bestehend aus 40-75 Gew.-% Al2O3, 0-20 Gew.-% MgO, 2-15 Gew.-% SiO2, jeweils kleiner 1 % Aluminum-Metall und Aluminium-Nitrid und einem Glühverlust bei 1400°C von 5-35 Gew.-%. Zu Gehalten an Aluminiumhydroxiden werden keine klaren Angaben gemacht; es wird lediglich eine "amorphous alumina precursor phase" bzw. "hydrated amorphous phase" beschrieben, die sich beim Kalzinieren in Korund umwandelt (Spalte 6, Zeilen 39-48). Nach dem Vermischen mit CaO oder CaO-Trägern (Calciumhydroxid oder Calciumcarbonat) werden Pellets oder Extrudate geformt und auf eine Temperatur zwischen 1093 und 1193°C erhitzt. Ein nach diesem Verfahren hergestelltes Calciumaluminat-Produkt hat einen Schmelzpunkt von 1360°C (Spalte 12, Zeilen 6-8). Das NMP wird aus Aluminiumsalzschlacke hergestellt, wobei die durch Feinklassierung erfolgte Reduzierung der Gehalte an Aluminium-Metall und Aluminium-Nitrid beim Sintern des Calciumaluminats die Bildung von Ansätzen und Agglomeraten vermeiden hilft (Spalte 11, Zeilen 46-49). Der Nachteil dieses Verfahrens ist, dass das mechanisch abgetrennte Aluminium-Metall und Aluminium-Nitrid nicht mehr für die Bildung von Aluminiumoxid zur Verfügung stehen, also der Al2O3-Gehalt des Tonerdeträgers verringert wird, insgesamt mehr Tonerdeträger in der Mischung benötigt wird und aufgrund der im NMP enthaltenen Verunreinigungen der Reinheitsgrad und damit die Qualität des Calciumaluminats verschlechtert wird.

Der Erfindung liegt die Aufgabe zu Grunde, aus dem - aufgrund hoher Restgehalte an Al-Metall, Al-Nitrid, Ammoniak und Feuchte - in seiner direkten Verwendbarkeit beeinträchtigten Tonerdeprodukt aus der Aufarbeitung von Salzschlacken der Aluminiumindustrie einen hochtonerdehaltigen Rohstoff zu gewinnen, der zur Herstellung von Produkten, die durch Sintern oder Schmelzen erzeugt werden (keramische und feuerfeste Erzeugnisse, Zement, Calciumaluminat-Schlackenbildner für die Eisen- und Stahlerzeugung, Mineralwolle und keramische Fasern), besser einsetzbar ist, insbesondere bessere Sintereigenschaften aufweist. Ferner soll ein schnell erhärtender Baustoff mit hoher Porosität herstellbar sein, ohne eine Teilkalzination des Tonerdeproduktes im Temperaturbereich 400-1000°C zu erfordern (wie nach EP-1180504).

Die Aufgabe wird dadurch gelöst, dass ein aus der Aufarbeitung von Aluminium-Salzschlacken gewonnenes Tonerdeprodukt (mit Gehalten an Al-Trihydroxid, Al-Metall und Al-Nitrid) mechanisch so ausreichend verdichtet wird, dass das Fortschreiten der exothermen Reaktion von restlichem Al-Metall und Al-Nitrid mit dem Feuchtewasser zu weiterem Aluminiumhydroxid begünstigt wird, und aufgrund der freigesetzten Wärme feuchtwarme, hydrothermale Bedingungen erhalten werden, unter denen sich das Al-Trihydroxid (Bayerit) in das an Kristallwasser ärmere Al-Monohydroxid (Böhmit) umwandeln kann. Ausgehend von einem feuchten Tonerdeprodukt läßt sich auf diese Weise restliches Al-Metall und Al-Nitrid in Aluminiumhydroxid umwandeln, ohne eine Verringerung des Gesamtgehaltes an Al2O3 in Kauf zu nehmen (im Unterschied zu US-6238633). Es verringert sich auch der Geruch nach Ammoniak aufgrund der Verdampfung des ammoniakalischen Feuchtewassers.

Die Vorteile des Al-Monohydroxids Böhmit gegenüber dem Al-Trihydroxid Bayerit beim Sintern oder Schmelzen sind der geringere Kristallwassergehalt, der breitere Temperaturbereich der Abspaltung des Kristallwassers und die höhere Kristalldichte. Damit sich die Vorteile des Gehaltes an Böhmit auch deutlich auswirken, sollte das Al-Monohydrat mindestens 20 % der Al-Hydroxidphasen ausmachen, das Verhältnis von Böhmit zu Bayerit also größer als 20:80 = 0,25 sein. Das Phasenverhältnis wird dabei durch Röntgenbeugung und Vergleich der Peakintensitäten von Böhmit (d = 6,11 Å) und Bayerit (d = 4,72 Å) ermittelt. Wenn Böhmit sehr feinkristallin bis kolloidal anfällt, ist im Bereich von d = 6,11 Å eine Peakverbreiterung festzustellen.

Die folgende Tabelle zeigt die Eigenschaften der beiden Aluminiumhydroxid-Phasen im Vergleich:

| | Al-Trihydroxid | Al-Monohydroxid |
|---|---|---|
| Formel | Al2O3.3H2O | Al2O3.H2O |
| | oder Al(OH)3 | oder AIOOH |
| Mineralphase | Bayerit | Böhmit |
| Al2O3-Gehalt % | 65,4 | 85,0 |
| Glühverlust (Kristallwasser) % | 34,6 | 15,0 |
| Kristallwasserabspaltung °C | 200-400 | 400-700 |
| theoretische Dichte g/cm³ | 2,53 | 3,01 |
| Rohdichte (ohne Kristallwasser) g/cm³ | 1,65 | 2,56 |

Nach C. Misra (Industrial Alumina Chemicals, American Chemical Society 1986, Seite 17) erfordert die hydrothermale Umwandlung von Al-Trihydroxid in Böhmit Temperaturen oberhalb 150°C. Zur Einstellung der hydrothermalen Bedingungen wird in der Regel ein geschlossener, beheizter Druckbehälter (Autoklav) benötigt.

Der hochtonerdehaltige Rohstoff kann dadurch gebildet werden, dass nach Trocknung des Tonerdeprodukts auf eine Restfeuchte von kleiner 5% eine Verdichtung und Mahlung in einer Vibrationsmühle erfolgt. Ein auf diese Weise gewonnenes Pulver eignet sich besonders für die Herstellung porosierter Bindemittelbaustoffe (z.B. Mineralschaum auf Basis von alkalischem Wasserglas).

Die Bildung des hochtonerdehaltigen Rohstoffes kann ferner dadurch erfolgen, dass das Tonerdeprodukt in Mischung mit anderen geeigneten mineralischen Stoffen verdichtet wird, die zweckmäßigerweise ebenfalls eine Teilchengröße von mindestens 90 Gew.-% kleiner 500 µm besitzen. Diese mineralischen Stoffe können beispielsweise gebrannter Kalk, gelöschter Kalk, Zement (Portlandzement, Aluminatzement), Kalksteinmehl, Eisenoxid- und Siliziumoxid-Träger (Ton, Sand, Kiesabbrand, Hämatit, Rotschlamm, Flugasche) sein. Damit lassen sich Mischungen bilden, die je nach gewünschter Zusammensetzung zur Herstellung von keramischen und feuerfesten Produkten, Zement, Schlackenbildnern für die Eisen- und Stahlerzeugung, Mineralwolle und keramischen Fasern einsetzbar sind.

### Beispiel 1

In den folgenden Beispielen wurde ein Tonerdeprodukt verwendet, mit schlammiger Konsistenz, deutlichem Geruch nach Ammoniak, einer Feuchte von 35 Gew.-%, einer Teilchengröße von 90 Gew.-% kleiner 0,5 mm, der chemischen Zusammensetzung
(bezogen auf getrocknete Substanz in Gew.-%)

| | |
|---|---|
| Al2O3 | 61 |
| Al-Metall | 2,4 |
| AlN | 1,1 |
| SiO2 | 7,0 |
| MgO | 7,7 |
| CaO | 3,1 |
| Fe2O3 | 1,4 |
| F | 1,5 |
| Cl | 0,3 |
| Glühverlust 600°C | 11,6 |
| Rest | 2,9 |

und den mineralischen Hauptbestandteilen

| | |
|---|---|
| Bayerit Al2O3.3H2O | 33,5 Gew.-% |
| Spinell MgAl2O4 | 27,5 Gew.-%. |
| Korund α-Al2O3 | 19,3 Gew.-%. |

Die Gehalte der mineralischen Hauptbestandteile wurden dabei aus der chemischen Zusammensetzung wie folgt errechnet:
Bayerit = Glühverlust 600°C x 100 / 34,6 (Kristallwasser-Gehalt von Bayerit: 34,6 %)
Spinell = MgO x 100 / 28 (MgO-Gehalt von Spinell: 28 %)
Korund = (Al2O3 + MgO + Glühverlust 600°C) - Bayerit - Spinell

Das Produkt hatte eine Reindichte (theoretische Dichte) von 2,95 g/cm³ und eine Schüttdichte von 1,65 g/cm³ (bezogen auf getrocknete Substanz: 1,07 g/cm³).

### Beispiel 2

Das Tonerdeprodukt nach Beispiel 1 wurde mit Zugabe von 10 Gew.-% CaO (Branntkalk) in einem Zwangsmischer gemischt und dabei verdichtet. Im Mischgut stellten sich feuchtwarme bis hydrothermale Bedingungen ein, erkennbar an einer Entwicklung von Wasserdampf. In dem Mischgut ließ sich nach etwa 10 Minuten ein Temperaturanstieg auf mehr als 70°C messen. Nach 60 Minuten hatte der neue hochtonerdehaltige Rohstoff keinen merklichen Ammoniak-Geruch mehr, eine Feuchte von 10 %, einen Al-Gehalt von 0,5 % und einen AIN-Gehalt 0,3 %. Das Verhältnis von Al-Monohydroxid zu Al-Trihydroxid, bestimmt durch Röntgenbeugung und Vergleich der Peakintensitäten von Böhmit (d = 6,11Å) und Bayerit (d = 4,72 Å), betrug 0,6.

Aus diesem Beispiel und weiterer Untersuchungen ist ableitbar, dass der Grad der Bildung von Böhmit in Abhängigkeit von der Kompaktierungsdichte, der Haufwerksgröße, der Behandlungsdauer, der Umgebungstemperatur und der exothermen Reaktionsfähigkeit eines Mischpartners mit dem Feuchtewasser aus dem Tonerdeprodukt gesteuert werden kann. Während beispielsweise CaO stark exotherm zu Calciumhydroxid reagiert, wird die Reaktion bei Zugabe von Zement (Portlandzement, Aluminatzement) schwächer sein. Trockene Zusatzstoffe, bei denen lediglich eine physikalische Bindung des Feuchtewassers durch Benetzung der Teilchen-Oberfläche erfolgt, z.B. trocken gelöschter Kalk, Kalksteinmehl, Eisenoxid- und Siliziumoxid-Träger (Ton, Sand, Kiesabbrand, Hämatit, Rotschlamm, Flugasche), werden zumindest dadurch dazu beitragen, die Konsistenz des Tonerdeprodukts zu verbessern.

### Beispiel 3

Für die Herstellung eines gesinterten Calciumaluminats (als Schlackenbildner für die Stahlherstellung), mit den Hauptkomponenten CaO (ca. 40 Gew.-%) und Al2O3 (ca. 45 Gew.-%) wurden Tonerdeprodukt nach Beispiel 1 bzw. hochtonerdehaltiger Rohstoff nach Beispiel 2 und Kalksteinmehl mit der Zusammensetzung

| | |
|---|---|
| CaO | 54,2 Gew.-% |
| CO2 | 43,1 Gew.-% |
| SiO2 | 1,2 Gew.-% |
| Al2O3 | 0,5 Gew.-% |
| Fe2O3 | 0,4 Gew.-% |

in den entsprechenden Mengenverhältnissen gemischt und zu Pellets von ca. 10 mm Durchmesser geformt. Das Sintern der Pellets erfolgte in einem elektrisch beheizten Labor-Muffelofen bei 900 - 1300°C mit einer Haltezeit von 30 Minuten.

Für den Gehalt an der Mineralphase 12CaO.7Al2O3 (durch Röntgenbeugung ermittelt, Angabe in Gew.-%) ergaben sich in Abhängigkeit von der Sintertemperatur:

| Temperatur °C | 900 | 1000 | 1100 | 1200 |
|---|---|---|---|---|
| Tonerdeprodukt (Beispiel 1) | 27 | 31 | 34 | 40 |
| hochtonerdehaltiger Rohstoff (Beispiel 2) | 41 | 44 | 48 | 48 |

Die Bildung von Calciumaluminat 12CaO.7Al2O3 war somit bei Verwendung des hochtonerdehaltigen Rohstoffs nach Beispiel 2 bereits bei 1100°C abgeschlossen, während bei Verwendung des Tonerdeprodukts nach Beispiel 1 die Reaktion bei 1200°C noch unvollständig war.

Ein Schlackenbildner soll einen möglichst niedrigen Schmelzpunkt besitzen. Der Schmelzpunkt des Calciumaluminats, das unter Verwendung des hochtonerdehaltigen Rohstoffs nach Beispiel 2 bei 1100°C gesintert wurde, betrug nur 1290°C (gemessen nach DIN 51070 mittels Erhitzungsmikroskop als Halbkugeltemperatur), während für den nach US-6238633 bei 1093-1193°C gesinterten Calciumaluminat-Schlackenbildner ein Schmelzpunkt von 1360°C angegeben wird.

Aus dem besseren Reaktionsverhaltens des hochtonerdehaltigen Rohstoffs nach Beispiel 2 bei der Herstellung von gesintertem Calciumaluminat lässt sich ableiten, dass dieser Rohstoff auch bei anderen Sinterprodukten (wie keramische und feuerfeste Erzeugnisse) oder Schmelzprodukten, deren Rohmischung bis zum Schmelzen eine Sinterphase durchläuft (Mineralwolle, keramische Fasern), bessere Sintereigenschaften haben wird als das Tonerdeprodukt nach Beispiel 1 oder nach US-6238633.

### Beispiel 4

Zur Herstellung eines porosierten Baustoffes wurde ein Tonerdeprodukt nach Beispiel 1 mit 2,4 % Al-Metall zunächst auf eine Feuchte von 4 Gew.-% getrocknet und anschließend davon eine Menge von 30 g in einer Vibrationsmühle (Labor-Scheibenschwingmühle) 10 min lang gemahlen. Die Temperatur des Mühleninhalts wurde auf T = 85 °C gehalten. Der so erzeugte neue Rohstoff enthielt Aluminiummonohydroxid (Böhmit) und Aluminiumtrihydroxid (Bayerit) im Gewichtsverhältnis von 1,9. Der Gehalt an Al-Metall betrug 1,4 Gew.-%.

Der neue Rohstoff wurde mit alkalischem Wasserglas im Verhältnis 30 g zu 25 g bei Raumtemperatur in einen Kunststoffbecher mit 5 cm Durchmesser und 10 cm Höhe gegeben und durch kurzes Umrühren (ca. 1 min) mittels eines Löffels zu einem Brei vermischt. Nach etwa 5 Minuten trat eine Gasentwicklung im Brei ein, die zu einer Schaumbildung und Volumenzunahme führte, verbunden mit Erwärmung und Erhärtung der Masse. Als Ergebnis wurden die Volumenzunahme (gemessen über die Höhe der aufgeschäumten Masse) und die Reaktionszeit festgehalten. Die erreichte Volumenzunahme betrug ca. 450 %. Die Verfestigung zu einem mechanisch stabilen Körper erfolgte nach etwa 10 Minuten.

## Patentansprüche

1. Hochtonerdehaltiger Rohstoff, bestehend aus (bezogen auf Trockensubstanz)
| | | |
|---|---|---|
| Al₂O₃ | 50-80 | Gew.-% |
| MgO | 2-15 | Gew.-% |
| SiO₂ | 1-15 | Gew.-% |
| CaO | 0,5 - 20 | Gew.-% |
| Fe₂O₃ | 0,5-2 | Gew.-% |
| Na₂O | 0,5-2 | Gew.-% |
| Al-metallisch | 0,1-2 | Gew.-% |
| AIN | 0,1 - 1 | Gew.-% |
| K₂O | 0,1-1,5 | Gew.-% |
| F | 0,1 - 2 | Gew.-% |
| Cl | 0,1-0,8 | Gew.-% |
| Rest zusammen | max. 5 | Gew.-% |
| Glühverlust | max.15 | Gew.-% |
und den mineralischen Hauptbestandteilen
| | | |
|---|---|---|
| Aluminiumhydroxid | 20-60 | Gew.-% |
| Korund α-Al₂O₃ | 10-40 | Gew.-% |
| Spinell MgAl₂O₄ | 5-40 | Gew.-% |
**dadurch gekennzeichnet, dass** das Aluminiumhydroxid in Form von Al-Monohydroxid Al₂O₃xH₂O und Al-Trihydroxid Al₂O₃x3H₂O im Gewichtsverhältnis von größer als 0,25 vorliegt.

2. Hochtonerdehaltiger Rohstoff nach Anspruch 1, **dadurch gekennzeichnet, dass** das Al-Monohydroxid die Kristallmodifikation Böhmit besitzt.

3. Verfahren zur Herstellung eines hochtonerdehaltigen Rohstoffs nach einem der Ansprüche 1 bis 2, **dadurch gekennzeichnet, dass** ein aus der Aufarbeitung von Aluminium-Salzschlacken gewonnenes Tonerdeprodukt, bestehend aus (bezogen auf Trockensubstanz)
| | | |
|---|---|---|
| Al₂O₃ | 50-80 | Gew.-% |
| MgO | 2-15 | Gew.-% |
| SiO₂ | 1-15 | Gew.-% |
| Al-metallisch | 1- 5 | Gew.-% |
| CaO | 0,5-5 | Gew.-% |
| Fe₂O₃ | 0,5-2 | Gew.-% |
| Na₂O | 0,5-2 | Gew.-% |
| AIN | 0,1-2 | Gew.-% |
| K₂O | 0,1-1.5 | Gew.-% |
| F | 0,1-2 | Gew.-% |
| Cl | 0,1-0,8 | Gew.-% |
| Rest zusammen | max. 5 | Gew.-% |
| Glühverlust | max. 15 | Gew.-% |
und den mineralischen Hauptbestandteilen
| | | |
|---|---|---|
| Aluminiumhydroxid Al₂O₃x₃H₂O | 20 - 50 | Gew.-% |
| Korund α-Al₂O₃ | 10-40 | Gew.-% |
| Spinell MgAl₂O₄ | 5-40 | Gew.-% |
in einer Teilchengröße von mehr als 90 Gew.-% kleiner 500 µm, mit einer Produktfeuchte von mehr als 25 Gew.-% Wasser, auf eine Packungsdichte von mehr als 1,1 g/cm³ (bezogen auf Trockenmasse) mechanisch verdichtet wird, und unter feuchtwarmen bis hydrothermalen Bedingungen bei Temperaturen von mindestens 70°C solange behandelt wird, bis sich Al-Trihydroxid Al₂O₃x3H₂O in Al-Monohydroxid Al₂O₃xH₂O umwandelt und das Gewichtsverhältnis von Al-Monohydroxid zu Al-Trihydroxid größer als 0,25 beträgt.

4. Verfahren zur Herstellung eines hochtonerdehaltigen Rohstoffs nach Anspruch 3, **dadurch gekennzeichnet, dass** dem Tonerdeprodukt vor dem mechanischen Verdichten bis zu 20 Gew.-% Branntkalk mit einer Teilchengröße von mindestens 90 Gew.-% kleiner 500 µm zugemischt wird.

5. Verfahren zur Herstellung eines hochtonerdehaltigen Rohstoffs nach einem der Ansprüche 3 bis 4, **dadurch gekennzeichnet, dass** das Tonerdeprodukt auf eine Restfeuchte von kleiner 5 Gew.-% getrocknet und anschließend in einer Vibrationsmühle gleichzeitig mechanisch verdichtet und gemahlen wird.

6. Verwendung eines hochtonerdehaltigen Rohstoffs nach einem der vorhergehenden Ansprüche als sinteraktiver Tonerdeträger für die Herstellung von keramischen und feuerfesten Produkten, Zement, porosierten Bindemittelbaustoffen, Schlackenbildnern für die Eisen- und Stahlerzeugung, Mineralwolle und keramischen Fasern.

7. Verwendung eines hochtonerdehaltigen Rohstoffs nach einem der Ansprüche 1 bis 5 in Mischungen mit Calciumoxid-Trägern (wie Kalk, Kalkstein, Gips, Anhydrit, Dolomit, Zement), Eisenoxid-Trägern (wie Kiesabbrand, Hämatit, Rotschlamm) und Siliziumoxid-Trägern (wie Ton, Sand, Flugasche).

## Claims

1. Highly aluminous prime material consisting of (related to dry substances)
| | | |
|---|---|---|
| Al₂O₃ | 50 - 80 | weight percent |
| MgO | 2 - 15 | weight percent |
| SiO₂ | 1 - 15 | weight percent |
| CaO | 0.5 - 20 | weight percent |
| Fe₂O₃ | 0.5 - 2 | weight percent |
| Na₂O | 0.5 - 2 | weight percent |
| Al metallic | 0.1 - 2 | weight percent |
| AIN | 0.1 - 1 | weight percent |
| K₂O | 0.1 - 1.5 | weight percent |
| F | 0.1 - 2 | weight percent |
| Cl | 0.1 - 0.8 | weight percent |
| balance totalling | max. 5 | weight percent |
| loss of ignition | max. 15 | weight percent |
and the main mineral constituents
| | | |
|---|---|---|
| aluminium hydroxide | 20 - 60 | weight percent |
| corundum α-Al₂O₃ | 10 - 40 | weight percent |
| spinel MgAl₂O₄ | 5 - 40 | weight percent |
**characterized by** the presence of aluminium hydroxide in the form of aluminium monohydroxide Al₂O₃xH₂O and aluminium trihydroxide Al₂O₃x3H₂O related by more than 0.25 in weight.

2. Highly aluminous prime material according to claim 1, **characterized by** the fact that the aluminium monohydroxide has the Boehmit crystal modification.

3. Method of manufacturing highly aluminous prime material according to claim 1 or 2, **characterized by** the fact that an alumina product is produced from recycling aluminium salt slag consisting of (related to dry substances)
| | | |
|---|---|---|
| Al₂O₃ | 50 - 80 | weight percent |
| MgO | 2 - 15 | weight percent |
| SiO₂ | 1 - 15 | weight percent |
| Al metallic | 1 - 5 | weight percent |
| CaO | 0.5 - 5 | weight percent |
| Fe₂O₃ | 0.5 - 2 | weight percent |
| Na₂O | 0.5 - 2 | weight percent |
| AIN | 0.1 - 2 | weight percent |
| K₂O | 0.1 - 1.5 | weight percent |
| F | 0.1 - 2 | weight percent |
| Cl | 0.1 - 0.8 | weight percent |
| balance totalling | max. 5 | weight percent |
| loss of ignition | max. 15 | weight percent |
and the main mineral constituents
| | | |
|---|---|---|
| aluminium hydroxide Al₂O₃x3H₂O | 20 - 50 | weight percent |
| corundum α-Al₂O₃ | 10 - 40 | weight percent |
| spinel MgAl₂O₄ | 5 - 40 | weight percent |
with a particle size of less than 500 µm for more than 90 weight percent, with a product humidity of water of more than 25 weight percent, compacted mechanically to a packing density of more than 1,1 g/cm³ (on a dry basis) and under warm moist to hydrothermal conditions, treated at temperatures of at least 70°C until aluminium trihydroxide Al₂O₃x3H₂O will be transformed into aluminium monohydroxide Al₂O₃xH₂O and the weight ratio of aluminium monohydroxide to aluminium trihydroxide will be more than 0.25.

4. Method of manufacturing highly aluminous prime material according to claim 3, **characterized by** the fact that up to 20 weight percent of calcium oxide with a particle size of less than 500 µm for more than 90 weight percent is added to the alumina product before the mechanical compacting process.

5. Method of manufacturing highly aluminous prime material according to claim 3 till 4, **characterized by** the fact that the alumina product is dried to a residual moisture of less than 5 weight percent and then mechanically compacted and grinded simultaneously in a vibrator mill.

6. Using a highly aluminous prime material according to one of the above mentioned claims as a sinter-active alumina carrier for manufacturing ceramic and fire-resisting products, cement, porous binding material for construction, slag-forming constituents for the production of iron and steel, mineral wool and ceramic fibres.

7. Using a highly aluminous prime material according to one of the claims 1 till 5 in mixtures with carriers of calcium oxide (such as lime, limestone, plaster, anhydrite, dolomite, cement), carriers of iron oxide(such as roasted pyrites, hematite, red mud) and carriers of silicon oxide (such as clay, sand, fly ash).

## Revendications

1. La matière première extra-alumineuse, comprenant (par rapport à la matière sèche)
| | | |
|---|---|---|
| Al₂O₃ | 50 - 80 | pourcentage pondéral |
| MgO | 2 - 15 | pourcentage pondéral |
| SiO₂ | 1 - 15 | pourcentage pondéral |
| CaO | 0,5 - 20 | pourcentage pondéral |
| Fe₂O₃ | 0,5 - 2 | pourcentage pondéral |
| Na₂O | 0,5 - 2 | pourcentage pondéral |
| AI métallique | 0,1 - 2 | pourcentage pondéral |
| AIN | 0,1 - 1 | pourcentage pondéral |
| K₂O | 0,1 - 1,5 | pourcentage pondéral |
| F | 0,1 - 2 | pourcentage pondéral |
| Cl | 0,1 - 0,8 | pourcentage pondéral |
| restant | 5 max. | pourcentage pondéral |
| perte par calcination | 15 max. | pourcentage pondéral |
et les constituants principaux de base minérale
| | | |
|---|---|---|
| hydroxyde d'aluminium | 20 - 60 | pourcentage pondéral |
| corindon α-Al₂O₃ | 10 - 40 | pourcentage pondéral |
| spinelle MgAl₂O₄ | 5 - 40 | pourcentage pondéral |
**caractérisée par le fait que** l'hydroxyde d'aluminium est présente en forme de monohydroxyde d'aluminium Al₂O₃xH₂O et de trihydroxyde d'aluminium Al₂O₃x3H₂O dans un rapport supérieur à 0,25 % du poids.

2. La matière première extra-alumineuse, selon la revendication 1, **caractérisée par le fait que** le monohydroxyde d'aluminium présente la modification des cristaux Böhmit.

3. Procédé de fabrication d'une matière première extra-alumineuse selon l'une des revendications 1 à 2, **caractérisé par le fait qu'**un produit alumineux est obtenu par le recyclage des scories salines d'alumine, comprenant (par rapport à la matière sèche)
| | | |
|---|---|---|
| Al₂O₃ | 50 - 80 | pourcentage pondéral |
| MgO | 2 - 15 | pourcentage pondéral |
| SiO₂ | 1 - 15 | pourcentage pondéral |
| Al métallique | 1 - 5 | pourcentage pondéral |
| CaO | 0,5 - 5 | pourcentage pondéral |
| Fe₂O₃ | 0,5 - 2 | pourcentage pondéral |
| Na₂O | 0,5 - 2 | pourcentage pondéral |
| ALN | 0,1 - 2 | pourcentage pondéral |
| K₂O | 0,1 - 1,5 | pourcentage pondéral |
| F | 0,1 -2 | pourcentage pondéral |
| Cl | 0,1 - 0,8 | pourcentage pondéral |
| restant | 5 max. | pourcentage pondéral |
| perte par calcination | 15 max. | pourcentage pondéral |
et les constituants principaux de base minérale
| | | |
|---|---|---|
| hydroxyde d'aluminium Al₂O₃x3H₂O | 20 - 50 | pourcentage pondéral |
| corindon α-Al₂O₃ | 10 -40 | pourcentage pondéral |
| spinelle MgAl₂O₄ | 5 - 40 | pourcentage pondéral |
de taille partielle inférieure à 500 µm dans plus de 90 % du poids, avec une humidité du produit supérieure à 25 % du poids en eau, en considérant que le produit sera tassé mécaniquement à une densité de 1,1 g/cm³ (par rapport à la matière sèche) et qu'il sera traité dans des conditions humides et chaudes jusqu'à hydrothermales à des températures de 70°C au moins, jusqu'à ce que le trihydroxyde d'aluminium Al₂O₃x3H₂O soit transformé en monohydroxyde d'aluminium Al₂O₃xH₂O et que le rapport du poids entre le monohydroxyde d'aluminium et le trihydroxyde d'aluminium soit supérieur à 0,25.

4. Procédé de fabrication d'une matière première extra-alumineuse selon la revendication 3, **caractérisé par le fait que** 20 % au plus du poids de chaux vive seront ajoutés au produit alumineux en taille partielle inférieure à 500 µm dans plus de 90 % du poids avant le tassement mécanique.

5. Procédé de fabrication d'une matière première extra-alumineuse selon l'une des revendications 3 à 4, **caractérisé par le fait que** le produit alumineux sera séché jusqu'à ce que l'humidité restante soit inférieure à 5 % du poids et qu'il sera tassé ensuite mécaniquement et broyé simultanément dans un broyeur vibrant.

6. Utilisation d'une matière première extra-alumineuse selon l'une des revendications sus-mentionnées comme agent de sintérisation d'alumine dans la fabrication de produits céramiques et réfractaires, du ciment, de matériaux de construction poreux liants, de formateurs de scories dans la production du fer et de l'acier, de laine de roche et de fibres céramiques.

7. Utilisation d'une matière première extra-alumineuse selon l'une des revendications de 1 à 5, mélangée à des agents supports d'oxyde de calcium (comme la chaux, le calcaire, la pierre à plâtre, l'anhydrite, la dolomite, le ciment), à des agents supports d'oxyde ferrique (comme le résidu de pyrites, l'hématite, la boue rouge) et à des agents supports d'oxyde de silicium (comme l'argile, le sable, la cendre volante).
